# FASCICULE DE BREVET EUROPEEN

(11) **EP 2 277 980 B1**
(45) Date de publication et mention de la délivrance du brevet: **08.08.2018**
(21) Numéro de dépôt: 10290340.8
(22) Date de dépôt: 23.06.2010
(51) Int. Cl.: C10G 45/44, C10G 45/58, C10G 49/00, B01D 3/00, B01J 8/02, C07C 5/10, C07C 5/22, C10G 45/48, C10G 45/52, C10G 65/04, C10G 65/08

(54) **PROCÉDÉ DE RÉDUCTION SÉLECTIVE DE LA TENEUR EN BENZÈNE ET EN COMPOSÉS INSATURES LEGERS DE DIFFERENTES COUPES HYDROCARBURES**
VERFAHREN ZUR SELEKTIVEN REDUZIERUNG DES BENZOLGEHALTS UND DES GEHALTS AN LEICHTEN UNGESÄTTIGTEN VERBINDUNGEN VON VERSCHIEDENEN KOHLENWASSERSTOFFVERSCHNITTEN
METHOD FOR SELECTIVELY REDUCING THE BENZENE AND UNSATURATED COMPOUNDS CONTENT OF VARIOUS HYDROCARBON CUTS

(30) Priorité: 21.07.2009 FR 0903586; 23.04.2010 US 765962
(43) Date de publication de la demande: 26.01.2011
(73) Titulaire: IFP Energies nouvelles, 92500 Rueil-Malmaison (FR)
(72) Inventeur: Nocca, Jean-Luc, Houston, TX 7077 (US)

(56) Documents cités:
- FR-A1- 2 684 893
- FR-A1- 2 686 095
- FR-A1- 2 743 080
- FR-A1- 2 744 441
- FR-A1- 2 777 012
- FR-A1- 2 777 013
- FR-A1- 2 782 322
- FR-A1- 2 787 117
- US-A- 6 054 630
- US-A1- 2008 286 172

## Description

La présente invention concerne un procédé de réduction de la teneur en composés insaturés d'une coupe d'hydrocarbures, et plus particulièrement un procédé de réduction sélective de la teneur en composés insaturés et notamment le benzène, d'au moins une coupe hydrocarbure.

Compte tenu de la nocivité reconnue du benzène et à un degré moindre des oléfines, composés insaturés, et des aromatiques plus lourds que le benzène, la tendance générale est de réduire la teneur de ces constituants dans les essences.

Le benzène a des propriétés cancérigènes et il est par conséquent exigé de limiter au maximum toute possibilité de polluer l'air ambiant, notamment en l'excluant pratiquement des carburants automobiles. Aux États-Unis les carburants reformulés ne doivent pas contenir plus de 0,62% de benzène; en Europe, même si les spécifications ne sont pas encore aussi sévères, il est préconisé de tendre progressivement vers cette valeur.

Les oléfines ont été reconnues comme étant parmi les hydrocarbures les plus réactifs dans le cycle de réactions photochimiques avec les oxydes d'azote, qui se produit dans l'atmosphère et qui conduit à la formation d'ozone. Une élévation de la concentration d'ozone dans l'air peut être source de troubles respiratoires. La diminution de la teneur en oléfines des essences, et plus particulièrement des oléfines les plus légères qui ont le plus tendance à se volatiliser lors des manipulations du carburant, est par conséquent souhaitable.

Les aromatiques plus lourds que le benzène présentent aussi mais à un degré moindre des propriétés cancérigènes et voient leurs teneurs dans les pools essence progressivement réduites.

La teneur en benzène d'une essence est très largement dépendante de celle des différentes coupes la composant. Ces différentes coupes sont notamment:
- le reformat résultant d'un traitement catalytique de naphta destiné à produire des hydrocarbures aromatiques, comprenant principalement de 4 à 12 atomes de carbone dans leur molécule et dont l'indice d'octane très élevé confère à l'essence ses propriétés antidétonantes. Ces coupes issues de reformage catalytique ont été les seules traitées jusqu'à présent pour atteindre des spécifications en benzène dans les pools essence de 1% volume. Pour descendre plus bas en terme de spécification et par exemple à 0,62 % volume, il est nécessaire que d'autres coupes soient traitées, et notamment les coupes détaillées ci-après.
- les coupes C5/C6 telles que :
   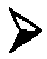 le naphta léger de distillation straight-run (Light Straight Run),
   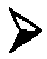 le naphta produit par unité d'hydrocraquage,
- d'autres coupes enrichies en benzène et aromatiques plus lourds par distillation et hydrotraitement et issues d'une unité de craquage catalytique ou FCC (Fluid Catalytic Cracking selon la terminologie anglo-saxonne) et les essences légères d'unité de cokéfaction (coker selon la terminologie anglo-saxonne), retardée, fluid ou flexicoker ou de viscoréduction (visbreaking selon la terminologie anglo-saxonne).
- les coupes enrichies en benzène et aromatiques plus lourds obtenues après séparation et hydrotraitement d'essences issues de craquage d'oléfines (craquage d'oléfines C₄ à C₁₀ en éthylène et propylène sur catalyseur acide),
- les coupes riches en benzène et aromatiques plus lourds issues d'unité de production d'oléfines type vapocraqueur (Pyrolysis gasoline selon la terminologie anglo-saxonne) ou de fours à coke (Coke Oven Light Oil selon la terminologie anglo-saxonne) après distillation et hydrotraitement.

Pour les raisons de nocivité décrites ci-dessus, il est donc nécessaire de réduire au maximum la teneur en benzène et aromatiques plus lourds de ces différentes coupes. Plusieurs voies sont envisageables.

Une première voie consiste à limiter, dans le naphta constituant la charge d'une unité de reformage catalytique, la teneur en précurseurs du benzène, tels que le cyclohexane et le méthylcyclopentane. Cette solution permet effectivement de réduire sensiblement la teneur en benzène de l'effluent de l'unité de réformage mais ne peut pas toujours suffire à elle seule lorsqu'il s'agit de descendre à des teneurs aussi basses que 0,62 %.

Une seconde voie consiste à éliminer, par distillation, une fraction légère du réformat contenant le benzène. Cette solution conduit à une perte de l'ordre de 15 à 20% d'hydrocarbures qui seraient valorisables dans les essences.

Une troisième voie consiste à extraire le benzène présent dans l'effluent de l'unité de réformage. Plusieurs techniques connues sont en principe applicables : extraction par solvant, distillation extractive, adsorption. Ces technologies présentent un coût élevé et requièrent un débouché pour la coupe benzène extraite.

Une quatrième voie consiste à transformer chimiquement le benzène pour le convertir en un constituant non visé par les limitations légales. L'alkylation par l'éthylène par exemple transforme le benzène principalement en éthylbenzène. Cette opération est cependant onéreuse du fait de l'intervention de réactions secondaires qui nécessitent des séparations coûteuses en énergie.

Le benzène d'un reformat peut également être hydrogéné en cyclohexane. Étant donné qu'il est impossible d'hydrogéner sélectivement le benzène d'un mélange d'hydrocarbures contenant également du toluène et des xylènes, il est donc nécessaire, si l'on ne souhaite convertir que le benzène, de fractionner préalablement ce mélange de manière à isoler une coupe ne contenant que le benzène, qui peut alors être hydrogéné.

Une solution pour réduire de façon sélective le benzène dans une coupe hydrocarbure est décrite dans le brevet EP 0 781 830. Ce brevet concerne un procédé de traitement d'une charge, constituée en majeure partie par des hydrocarbures comportant au moins 5 atomes de carbone par molécule et comprenant au moins un composé insaturé comportant au plus six atomes de carbone par molécule dont du benzène, dans lequel on traite ladite charge dans une zone de distillation, comportant une zone d'épuisement et une zone de rectification, associée à une zone réactionnelle d'hydrogénation, au moins en partie externe à la zone de distillation, comprenant au moins un lit catalytique. La charge de la zone réactionnelle est prélevée à la hauteur d'un niveau de prélèvement, l'effluent de la zone réactionnelle étant au moins en partie réintroduit dans la zone de distillation à la hauteur d'au moins un niveau de réintroduction, de manière à assurer la continuité de la distillation, et de façon à sortir finalement en tête de la zone de distillation un effluent très appauvri en composés insaturés comprenant au plus six atomes de carbone par molécule et en fond de zone de distillation un effluent appauvri en composés insaturés comprenant au plus six atomes de carbone par molécule.

Un inconvénient de cette technique est qu'elle ne prévoie de traiter que le réformat résultant d'un traitement catalytique de naphta, or il est également nécessaire de diminuer la quantité de composés insaturés légers, et notamment du benzène de l'ensemble des coupes susceptibles d'être incorporées au pool essence sans augmenter les coûts liés à l'étape de distillation.

La présente invention a donc pour objet de palier un ou plusieurs des inconvénients de l'art antérieur en proposant un procédé permettant de produire à moindre coût, à partir de différentes coupes d'hydrocarbures, un produit appauvri en composés insaturés et notamment en benzène ou, si nécessaire, totalement épuré de composés insaturés et notamment de benzène, sans perte significative de rendement, et avec très peu de perte d'indice d'octane.

Pour cela la présente invention propose un procédé défini dans la revendication 1. Selon un mode de réalisation du procédé, le soutirage latéral est réalisé au dessus de la ligne de retour de la zone réactionnelle.

Selon un autre mode de réalisation du procédé, le soutirage latéral est réalisé au dessous de la ligne de retour de la zone réactionnelle.

Selon un mode de réalisation du procédé, la seconde charge est constituée au moins par des hydrocarbures comportant au moins 4 atomes de carbone par molécule.

Selon un mode de réalisation du procédé, la seconde charge est constituée par une coupe C₅/C₆ de type naphta léger de distillation straight-run et/ou de type naphta produit par unité d'hydrocraquage, et/ou par des coupes enrichies en benzène et/ou toluène et appauvries en soufre et azote issues de craquage catalytique et/ou par des coupes essences constituées de coupes enrichies en benzène et/ou toluène appauvries en soufre et azote issues d'unité de cokéfaction ou de viscoréduction, et/ou par des coupes enrichies en benzène et/ou toluène, appauvries en soufre et azote et obtenues après craquage d'oléfines ou oligocraquage, et/ou par des coupes riches en benzène et/ou toluène, appauvries en soufre et azote et issues d'unité de production d'oléfines par vapocraquage.

Selon un autre mode de réalisation du procédé, la seconde charge est constituée d'au moins une charge choisie parmi :
- des hydrocarbures comportant au moins 4 atomes de carbone par molécule,
- une coupe C₅/C₆ de type naphta léger de distillation straight-run,
- une coupe C₅/C₆ de type naphta produit par unité d'hydrocraquage.
- une coupe d'essence de coeur de craquage catalytique enrichie en benzène par rapport à l'essence totale de craquage catalytique,
- une coupe d'essences légères d'unité de cokéfaction enrichie en benzène par rapport à l'essence totale de cokéfaction,
- une coupe enrichie en benzène obtenue après séparation et hydrotraitement d'essences issues de craquage d'oléfines ou oligocraquage,
- une coupe riche en benzène issue d'unité de production d'oléfines par vapocraquage.

Selon un mode de réalisation du procédé, la distillation est réalisée sous une pression comprise entre 0,2 et 2 MPa, avec un taux de reflux compris entre 0.5 et 10, la température de tête de zone de distillation étant comprise entre 40 et 180 °C et la température de fond de zone de distillation étant comprise entre 120 et 280 °C.

Selon un mode de réalisation du procédé, la zone réactionnelle d'hydrogénation est en totalité externe à la zone de distillation.

Selon un mode de réalisation du procédé, une partie de l'effluent du réacteur d'hydrogénation est recyclée à l'entrée du réacteur

Selon un mode de réalisation du procédé, la zone réactionnelle d'hydrogénation est à la fois partiellement incorporée dans la zone de rectification de la zone de distillation et partiellement externe à la zone de distillation.

Selon un mode de réalisation du procédé, la réaction réactionnelle d'hydrogénation, effectuée dans la partie de la zone d'hydrogénation interne à la zone de distillation, est conduite à une température comprise entre 100 et 200 °C, à une pression comprise entre 0,2 et 2 MPa, une vitesse spatiale au sein de la zone réactionnelle d'hydrogénation interne, calculée par rapport au catalyseur, comprise entre 1 et 50 h⁻¹ et le débit de l'hydrogène alimentant la zone réactionnelle d'hydrogénation est compris entre 0.5 et 10 fois le débit correspondant à la stoechiométrie des réactions d'hydrogénation en jeu.

Selon un autre mode de réalisation du procédé, la réaction d'hydrogénation effectuée dans la partie externe de la zone de distillation est réalisée à une pression comprise entre 0,1 et 6 MPa, une température comprise entre 100 et 400 °C, une vitesse spatiale au sein de la zone réactionnelle d'hydrogénation, calculée par rapport au catalyseur, généralement comprise entre 1 et 50 h⁻¹, et un débit d'hydrogène correspondant à la stoechiométrie des réactions d'hydrogénation en jeu est compris entre 0,5 et 10 fois ladite stoechiométrie.

Selon un mode de réalisation du procédé, on réalise une étape d'isomérisation de la charge de la zone réactionnelle prélevée à la hauteur d'au moins un niveau de prélèvement dans la zone de distillation.

Selon un mode de réalisation du procédé, l'étape d'isomérisation est réalisée dans le réacteur d'hydrogénation en même temps que la réaction d'hydrogénation.

Selon un mode de réalisation du procédé, l'étape d'isomérisation est réalisée à l'extérieur du réacteur de d'hydrogénation et après l'étape d'hydrogénation.

Selon un mode de réalisation du procédé, le catalyseur d'hydrogénation est en contact avec une phase liquide descendante et avec une phase vapeur ascendante, pour tout lit catalytique de la partie interne de la zone réactionnelle d'hydrogénation.

Selon un mode de réalisation du procédé, le flux gazeux comprenant de l'hydrogène nécessaire à la zone réactionnelle d'hydrogénation est joint à la phase vapeur, sensiblement à l'entrée d'au moins un lit catalytique de la zone réactionnelle d'hydrogénation.

Selon un mode de réalisation du procédé, l'écoulement du liquide à hydrogéner est co-courant à l'écoulement du flux gazeux comprenant de l'hydrogène, pour tout lit catalytique de la partie interne de la zone réactionnelle d'hydrogénation.

Selon un mode de réalisation du procédé, l'écoulement du liquide à hydrogéner est co-courant à l'écoulement du flux gazeux comprenant de l'hydrogène et tel que la vapeur de distillation n'est pratiquement pas en contact avec le catalyseur, pour tout lit catalytique de la partie interne de la zone réactionnelle d'hydrogénation.

Selon un mode de réalisation du procédé, quel le catalyseur utilisé dans la zone réactionnelle d'hydrogénation comprend au moins un métal choisi dans le groupe formé par le nickel, le zirconium et le platine.

Selon un mode de réalisation du procédé, le métal est sur support alumine chlorée ou alumine zéolithique.

L'invention concerne également l'utilisation du précédé pour la préparation d'une charge d'isomérisation de paraffines de meilleure qualité

D'autres caractéristiques et avantages de l'invention seront mieux compris et apparaîtront plus clairement à la lecture de la description faite, ci-après, en se référant aux figures annexées et données à titre d'exemple:
- la figure 1 est une représentation schématique du procédé selon l'invention de réduction de la teneur en composés insaturés légers, d'une coupe d'hydrocarbures,
- la figure 2 est une représentation schématique d'une variante du procédé selon l'invention de réduction de la teneur en composés insaturés légers, d'une coupe d'hydrocarbures.
- la figure 3 est une représentation schématique d'une autre variante du procédé selon l'invention de réduction de la teneur en composés insaturés légers, d'une coupe d'hydrocarbures.

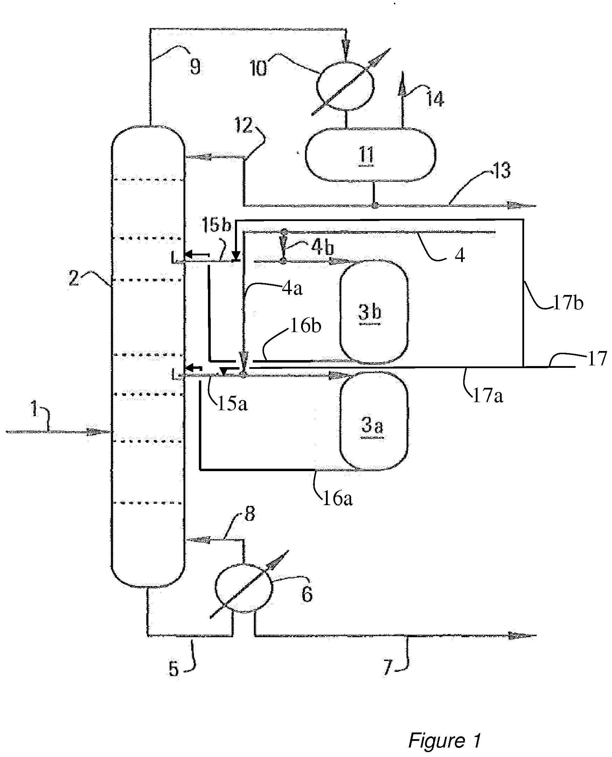

Le procédé selon l'invention, illustré sur les figures 1 à 3, consiste à réduire la teneur en composés insaturés légers de 6 à 12 atomes de carbone, dont le benzène, de différentes coupes d'hydrocarbures. Le procédé permet ainsi de produire un carburant, et plus particulièrement une essence, dont la teneur en benzène est réduite de façon à respecter les normes en vigueur, tout en maintenant un bon indice d'octane.

Le procédé de réduction de la teneur en composé insaturés légers selon l'invention comprend une opération de distillation, une opération d'hydrogénation et dans certains cas une opération d'isomérisation, agencées et opérées de manière à minimiser le coût d'investissement du procédé, à maximiser la conversion des produits insaturés tout en minimisant la consommation d'hydrogène et en maximisant le rendement en distillat et en résidu issus de la colonne, avec une teneur en benzène en composés insaturés légers, dont le benzène, adéquate.

Le procédé selon l'invention est un procédé de traitement d'au moins une charge, constituée en majeure partie par des hydrocarbures comportant au moins 4, de préférence entre 5 et 12 atomes de carbone par molécule, et comprenant au moins un composé insaturé léger et notamment du benzène. Les charges traitées sont par exemple :
- le reformat résultant d'un traitement catalytique de naphta destiné à produire des hydrocarbures aromatiques, comprenant principalement de 4 à 12 atomes de carbone dans leur molécule et dont l'indice d'octane très élevé confère à l'essence ses propriétés antidétonantes,
- les coupes C5/C6 telles que :
   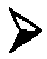 le naphta léger de distillation straight-run (Light Straight Run),
   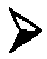 le naphta produit par unité d'hydrocraquage.

Les teneurs moyennes en benzène de telles coupes sont de l'ordre de 2 à 10 vol. % selon le brut traité et les points de coupe.

Ces coupes ne contiennent pas ou peu d'oléfines et leur co-traitement dans une unité de d'hydrogénation du benzène n'amène pas d'augmentation significative de perte en octane ou de consommation d'hydrogène en dehors de celles liées à l'hydrogénation du benzène.
- d'autres coupes issues de craquage catalytique ou FCC (Fluid Catalytic Cracking selon la terminologie anglo-saxonne) et les essences légères d'unité de cokéfaction (coker selon la terminologie anglo-saxonne) retardée, fluid ou flexicoker, ou de viscoréduction (Visbreaking selon la terminologie anglo-saxonne).

Ces coupes sont toujours oléfiniques et souvent riches en hétéro-atomes (soufre, azote, chlore) qui sont nocifs pour les catalyseurs d'hydrogénation de benzène. Elles requièrent souvent un prétraitement avant envoi à l'unité d'hydrogénation du benzène. Là encore, les teneurs dépendent des points de coupe ainsi que des qualités de charge de l'unité de conversion primaire (FCC ou coker ou visbreaker). Ces teneurs sont typiquement de l'ordre de 2 à 10 vol%, voire plus si l'on considère une coupe étroite.
- les coupes enrichies en benzène ou autres composés insaturés légers obtenues après séparation et hydrotraitement d'essences issues de craquage d'oléfines (craquage d'oléfines C₄ à C₁₀ en éthylène et propylène sur catalyseur acide),
- les coupes riches en benzène issues d'unité de production d'oléfines type vapocraqueur (Pyrolysis gasoline selon la terminologie anglo-saxonne) ou de fours à coke (Coke Oven Light Oil selon la terminologie anglo-saxonne).

Une première réalisation du procédé est représentée sur la figure 1. La charge formée par le réformat brut, contenant généralement de faibles quantités d'hydrocarbures C₄₋, est envoyé dans une colonne (2) de distillation par la ligne (1). La colonne (2) de distillation comporte une zone d'épuisement et une zone de rectification, associée à une zone réactionnelle d'hydrogénation. La zone de distillation comprend donc généralement au moins une colonne munie d'au moins un interne de distillation choisi dans le groupe formé par les plateaux, les garnissages en vrac et les garnissages structurés (représentés en partie par des traits pointillés sur la figure 1), ainsi qu'il est connu de l'homme du métier, tel que l'efficacité globale totale est au moins égale à cinq étages théoriques.

Dans ce mode de réalisation la zone réactionnelle d'hydrogénation est en totalité externe à la zone de distillation.

La charge qui alimente cette zone de distillation est introduite dans ladite zone de distillation généralement à au moins un niveau de ladite zone, de préférence principalement à un seul niveau de ladite zone.

En pied de colonne (2), la fraction la moins volatile de la charge, constituée principalement par les hydrocarbures à 7 atomes de carbone et plus (coupe C₇+) est récupérée par la ligne (5), rebouillie dans l'échangeur (ou four) (6) et évacuée par la ligne (7). Le produit de rebouillage est réintroduit dans la colonne par la ligne (8). En tête de colonne, le distillat léger c'est-à-dire comprenant principalement 4 à 7 atomes de carbone par molécule (coupe C₇-) et de manière préférée principalement 4 à 6 atomes de carbone par molécule (coupe C₆-), est envoyé par la ligne (9) dans un condenseur (10) puis dans un ballon séparateur (11) où intervient une séparation entre une phase liquide et une phase vapeur constituée principalement par l'hydrogène éventuellement en excès. La phase vapeur est évacuée du ballon par la ligne (14). La phase liquide du ballon (11) est renvoyée pour partie, par la ligne (12), en tête de colonne pour en assurer le reflux tandis que l'autre partie constitue le distillat liquide qui est évacué par la ligne (13).

Le distillat léger peut être aussi collecté directement en soutirage latéral liquide (non illustré) de la colonne, sans passer ensuite dans un ballon séparateur, afin d'en éliminer la majorité des composés légers C₄- et d'assurer une tension de vapeur satisfaisante.

Au moyen d'un plateau de soutirage disposé dans la zone de rectification ou optionnellement d'épuisement de la colonne, on soutire par la ligne (15a) un liquide que l'on envoie dans un réacteur d'hydrogénation 3a soit par le haut conformément à la figure 1 soit par le bas, après adjonction d'hydrogène par les lignes (4) puis (4a) ou directement dans le réacteur. L'effluent du réacteur d'hydrogénation est recyclé à la colonne par la ligne (16a), qui est soit au dessus de la ligne de prélèvement (15a) comme illustré sur la figure 1, soit au dessous de la ligne de prélèvement (15a).

Dans le mode de réalisation représenté sur la figure 1, le dispositif comporte un deuxième réacteur d'hydrogénation externe. On soutire par la ligne (15b) un liquide que l'on envoie dans le réacteur d'hydrogénation (3b), après adjonction d'hydrogène par les lignes (4) et (4b) ou directement dans le réacteur, et l'on recycle à la colonne par la ligne (16b) qui est soit au dessus de la ligne de prélèvement (16a) comme illustré sur la figure 1, soit au dessous de la ligne de prélèvement (16a).

Dans ce cas, l'étape d'hydrogénation est réalisée dans deux zones réactionnelles d'hydrogénation externe.

Pour chaque réacteur, un soutirage de l'effluent (non illustré) peut être envisagé afin par exemple d'alimenter une autre section réactionnelle telle qu'une section d'isomérisation de paraffines.

Selon un autre mode de réalisation non illustrée, le procédé comporte une étape d'hydrogénation réalisée dans une seule zone réactionnelle d'hydrogénation externe.

Le flux gaz récupéré en distillat vapeur de la colonne de distillation contenant éventuellement de l'hydrogène en excès peut être renvoyé après recompression vers le réacteur afin de minimiser la consommation en hydrogène du système (non illustré).

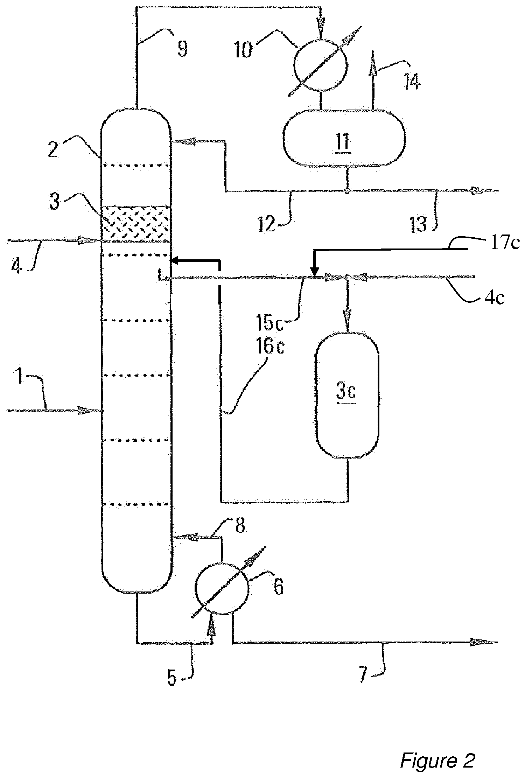

Selon un autre mode de réalisation du procédé, représenté sur la figure 2, la charge formée par le réformat brut (C₄₊), contenant généralement de faibles quantités d'hydrocarbures (C₄₋), est envoyé par la ligne (1) dans une colonne de distillation (2), munie d'internes de distillation qui sont par exemple dans le cas de la figure 2 des plateaux de distillation, ainsi que d'un interne catalytique (3) contenant un catalyseur d'hydrogénation et alimenté par de l'hydrogène par la ligne (4).

Dans ce mode de réalisation, la zone réactionnelle d'hydrogénation est au moins en partie externe à la zone de distillation. De la même façon que pour le mode de réalisation précèdent, la zone de distillation peut être scindée en deux colonnes. En pratique, lorsque la zone réactionnelle d'hydrogénation est au moins en partie interne à la zone de distillation, la zone de rectification ou la zone d'épuisement, et de préférence la zone d'épuisement, peut généralement se trouver dans au moins une colonne différente de la colonne comprenant la partie interne de la zone réactionnelle d'hydrogénation.

La zone réactionnelle d'hydrogénation peut également être partiellement incorporée dans la zone de rectification de la zone de distillation et partiellement externe à la zone de distillation.

Les effluents de tête et de fond de la colonne sont traités comme décrit ci-dessus pour la première réalisation du procédé. D'un plateau de soutirage disposé dans la zone de rectification de la colonne, on prélève par la ligne (15c) un liquide qui, après adjonction d'hydrogène par la ligne (4c), est introduit dans le réacteur d'hydrogénation (3c). L'effluent du réacteur d'hydrogénation est recyclé à la colonne de distillation par la ligne (16c), qui est soit au dessus de la ligne de prélèvement (15c) comme illustré sur la figure 2, soit au dessous de la ligne de prélèvement (15c). C'est dans cette zone réactionnelle d'hydrogénation (3c) qu'est réalisée l'hydrogénation d'au moins une partie des composés insaturés comprenant au plus six atomes de carbone par molécule, c'est-à-dire comprenant jusqu'à six (inclus) atomes de carbone par molécule, et contenus dans la charge.

Généralement, le procédé comprend de 1 à 6, de préférence de 1 à 4 niveau(x) de prélèvement qui alimente(nt) la partie externe de la zone d'hydrogénation. Une partie de la partie externe de la zone d'hydrogénation comprend généralement au moins un réacteur. Si la partie externe comprend au moins deux lits catalytiques répartis dans au moins deux réacteurs, lesdits réacteurs sont disposés en série ou en parallèle et chacun desdits réacteurs est de préférence alimenté par un niveau de prélèvement distinct du niveau de prélèvement qui alimente l'(es) autre(s) réacteur(s).

La zone réactionnelle d'hydrogénation comprend généralement au moins un lit catalytique d'hydrogénation, de préférence de 2 à 4 lit(s) catalytique(s). La zone réactionnelle d'hydrogénation réalise au moins partiellement l'hydrogénation du benzène présent dans la charge, généralement de telle façon que la teneur en benzène de l'effluent de tête soit au maximum égale à une certaine teneur, et ladite zone réactionnelle d'hydrogénation réalise au moins en partie, de préférence en majeure partie, l'hydrogénation de tout composé insaturé comprenant au plus six atomes de carbone par molécule et différent du benzène, éventuellement présent dans la charge.

Lorsque la zone réactionnelle d'hydrogénation est à la fois partiellement incorporée dans la zone de distillation, c'est-à-dire interne à la zone de distillation, et partiellement externe à la zone de distillation, la zone réactionnelle d'hydrogénation comprend au moins deux, de préférence au moins trois lits catalytiques, au moins un lit catalytique étant interne à la zone de distillation, et au moins un lit catalytique étant externe à la zone de distillation. Dans le cas où la partie externe de la zone d'hydrogénation comporte au moins deux lits catalytiques, chaque lit catalytique est alimenté par un seul niveau de prélèvement, de préférence associé à un seul niveau de réintroduction, ledit niveau de prélèvement étant distinct du niveau de prélèvement qui alimente l'(es) autre(s) lit(s) catalytique(s). Généralement, le liquide à hydrogéner, soit partiellement, soit totalement, circule d'abord dans la partie externe de la zone d'hydrogénation puis dans la partie interne de ladite zone d'hydrogénation. Pour la partie de la zone réactionnelle d'hydrogénation interne à la zone de distillation, le prélèvement de liquide est fait naturellement par écoulement dans la partie de la zone réactionnelle interne à la zone de distillation, et la réintroduction de liquide en zone de distillation se fait aussi naturellement par écoulement du liquide à partir de la zone réactionnelle d'hydrogénation interne à la zone de distillation. De plus, le procédé est de préférence tel que l'écoulement du liquide à hydrogéner est co-courant ou contre courant, de préférence co-courant, à l'écoulement du flux gazeux comprenant de l'hydrogène, pour tout lit catalytique de la partie interne de la zone d'hydrogénation, et de façon encore plus préférée tel que l'écoulement du liquide à hydrogéner est co-courant à l'écoulement du flux gazeux comprenant de l'hydrogène et tel que la vapeur est séparée dudit liquide, pour tout lit catalytique de la partie interne de la zone d'hydrogénation.

L'invention réside dans le fait que la zone réactionnelle d'hydrogénation est alimentée par deux charges à hydrogéner distinctes.

Une première charge à hydrogéner, comme déjà décrit dans le brevet EP 0 781 830, est formée par celle prélevée dans la colonne (2) de distillation. Cette première charge à hydrogéner est prélevée via la ligne (15a, b ou c) à la hauteur d'un niveau de prélèvement et représente au moins une partie, de préférence la majeure partie, du liquide coulant dans la zone de distillation, de préférence coulant dans la zone de rectification et de façon encore plus préférée coulant à un niveau intermédiaire de la zone de rectification. De manière préférée coulant à un niveau d'au moins 2 plateaux, et de manière très préférée d'au moins 10 plateaux de la tête et du fond de colonne.

Une deuxième charge à hydrogéner est injectée directement dans la partie externe de la zone de distillation en amont de la zone réactionnelle d'hydrogénation via la ligne (17c) ou directement dans la zone réactionnelle d'hydrogénation lorsque celle-ci est totalement externe à la colonne de distillation via la ligne (17a, b), et plus particulièrement dans le réacteur d'hydrogénation.

Cette deuxième charge peut injectée au moins partiellement ou en totalité dans la zone réactionnelle d'hydrogénation externe à la colonne de distillation.

Dans le cas où elle est injectée au moins partiellement, l'injection peut se faire avec le complément injecté dans la partie interne de la zone réactionnelle d'hydrogénation.

La deuxième charge peut être injectée via les lignes (17a, b ou c) après un mélange préalable avec la première charge prélevée via la ligne (15a, b ou c) et adjonction d'hydrogène via la ligne (4a, b, c), comme illustré sur les figures 1 et 2.

Selon une autre variante de l'invention la deuxième charge peut être injectée seule après adjonction d'hydrogène, c'est à dire sans être préalablement mélangée avec la première charge (non illustré).

Cette deuxième charge peut être caractérisée par l'absence ou la faible teneur en composés insaturés lourds que l'on désire préserver. Elle peut être formée par toutes les coupes suivantes enrichies en benzène et/ou en aromatiques plus lourds que le benzène par rapport aux coupes essences brutes issues des procédés en question et appauvries en soufre, azote et chlore par hydrotraitement:
- le réformat léger résultant d'un traitement catalytique de naphta destiné à produire des hydrocarbures aromatiques, comprenant principalement de 4 à 7 atomes de carbone dans leur molécule (coupe C₇-, C₆-) et dont l'indice d'octane très élevé confère à l'essence ses propriétés antidétonantes,
- les coupes C5/C6 telles que :
   > le naphta léger de distillation straight-run (Light Straight Run),
   > le naphta produit par unité d'hydrocraquage.

Les teneurs moyennes en benzène de telles coupes sont de l'ordre de 2 à 10 vol. % selon la nature du pétrole brut dont elles sont issues et les points de coupe.
- d'autres coupes enrichies en benzène par distillation et hydrotraitement et issues de craquage catalytique ou FCC (Fluid Catalytic Cracking selon la terminologie anglo-saxonne) et les essences légères d'unité de cokéfaction (coker selon la terminologie anglo-saxonne) (retardée, fluid ou flexicoker) ou de viscoréduction (Visbreaking selon la terminologie anglo-saxonne).
- les coupes enrichies en benzène obtenues après séparation et hydrotraitement d'essences issues de craquage d'oléfines (craquage d'oléfines C4 à C10 en éthylène et propylène sur catalyseur acide),
- les coupes riches en benzène issues d'unité de production d'oléfines type vapocraqueur (Pyrolysis gasoline selon la terminologie anglo-saxonne) ou de fours à coke (Coke Oven Light Oil selon la terminologie anglo-saxonne) après distillation et hydrotraitement.

L'avantage d'un tel mode de réalisation provient du fait que le procédé permet ainsi de traiter une plus grande quantité de charges de différentes natures sans investissement matériel particulier, ni coût supplémentaire notoire. En effet la ou les deuxièmes charges à hydrogéner sont directement introduites dans le réacteur d'hydrogénation sans passer au préalable par la colonne de distillation ou introduits dans la zone de distillation dans un endroit préférentiel au vu de leurs points d'ébullition. Il n'y a donc pas ou peu de consommations d'énergie supplémentaire du au travail de la colonne, du rebouilleur et du condenseur.

Un autre avantage provient du fait qu'étant donné que l'hydrogénation du benzène conduit à une perte d'octane, il est souvent intéressant d'envoyer le distillat hydrogéné vers une unité d'isomérisation des paraffines. Avec une distillation conventionnelle, il n'est pas possible de récupérer dans le distillat l'essentiel du benzène sans entraîner plusieurs % de C₇ (typiquement 3% et plus) dans le distillat. Les composés C₇ ainsi que le cyclohexane produit par hydrogénation du benzène sont des inhibiteurs du catalyseur d'isomérisation, augmentent la consommation d'hydrogène et diminuent le rendement volumique de l'isomérisation suite à des réactions d'hydrocracking. Dans le procédé selon l'invention l'hydrogénation du benzène dans le réacteur latéral ou interne à la colonne permet de casser l'azéotrope entre composés C₇ et benzène et de récupérer une partie du cyclohexane en fond de colonne ce qui permet d'obtenir une charge de meilleure qualité à l'unité d'isomérisation.

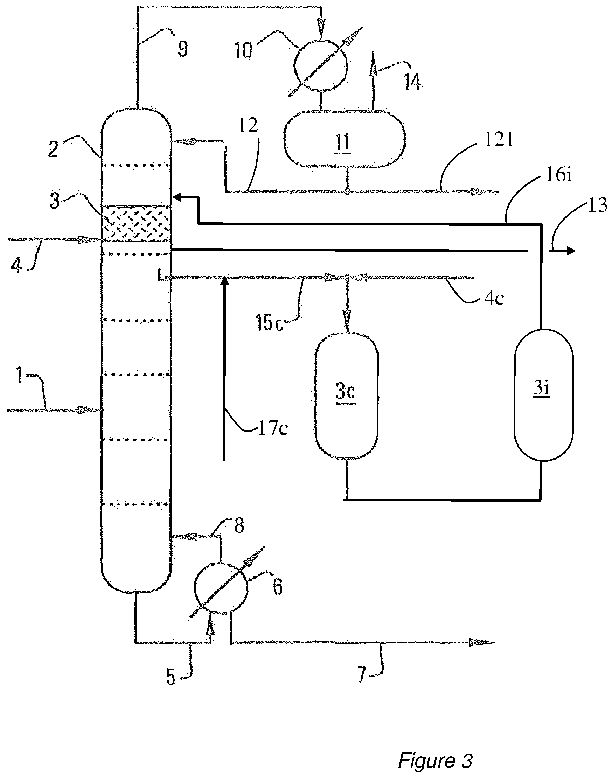

Selon un autre mode de réalisation de l'invention illustré sur la figure 3, le procédé comprend une étape d'isomérisation de la charge de la zone réactionnelle prélevée à la hauteur d'au moins un niveau de prélèvement dans la zone de distillation. Selon le mode de réalisation illustré sur la figure 3, cette étape d'isomérisation est réalisée après l'étape d'hydrogénation. Elle a lieu dans un réacteur d'isomérisation bien connu de l'homme du métier. Dans ce cas on prélève par la ligne (15c) un liquide qui, après adjonction d'hydrogène par la ligne (4c), est introduit dans le réacteur d'hydrogénation (3c). La deuxième charge à hydrogéner est injectée directement dans la partie externe de la zone de distillation en amont de la zone réactionnelle d'hydrogénation via la ligne (17c). L'effluent du réacteur d'hydrogénation est ensuite envoyé vers le réacteur d'isomérisation (3i) puis est recyclé à la colonne de distillation par la ligne (16i), qui est soit au dessus de la ligne de prélèvement (15c) comme illustré sur la figure 3, soit au dessous de la ligne de prélèvement (15c). le distillat léger est soutiré latéralement via la ligne (13). Ce soutirage peut être réalisé soit au dessous du retour du réacteur d'isomérisation via la ligne 16i (comme illustré sur la figure 3), soit au dessus (non illustré sur la figure 3) du retour du réacteur d'isomérisation via la ligne 16i . La ligne 121 est utilisée pour réguler la tension de vapeur par extraction de liquidé. Ce liquide pourra être par la suite valorisé.

Selon une autre variante non illustrée, la réaction d'isomérisation peut avoir lieu dans le même réacteur que la réaction d'hydrogénation. Lorsque la réaction d'isomérisation à lieu dans le réacteur d'hydrogénation, la réaction se fait soit en même temps soit à la suite de l'hydrogénation, par exemple au moyen de deux lits consécutifs dans lesquels sont disposés successivement un catalyseur d'hydrogénation et un catalyseur d'isomérisation.

Comme décrit précédemment, la zone réactionnelle d'hydrogénation peut être en totalité externe à la zone de distillation ou partiellement externe. Dans ce cas la réaction d'isomérisation lorsqu'elle a lieu dans le même réacteur que la réaction d'hydrogénation, a lieu dans la partie de la zone d'hydrogénation externe à la zone de distillation.

Lorsque le procédé utilise deux réacteurs d'hydrogénation, la réaction d'isomérisation peut être réalisée dans chacun des deux réacteur d'hydrogénation, ou peut être réalisée dans deux réacteurs d'isomérisation disposés chacun à la suite d'un réacteur d'hydrogénation (non illustré). Le procédé peut ainsi comporter deux étapes d'isomérisation lorsqu'il y'a deux étapes d'hydrogénation.

Cette étape d'isomérisation permet d'améliorer l'indice d'octane de la charge obtenue.

Le procédé, concerne ainsi des réactions produisant un (ou plusieurs) produits ayant des points d'ébullition inférieurs et/ou presque identiques au point d'ébullition des réactifs, plus particulièrement le cas de l'hydrogénation des oléfines ayant au plus six atomes de carbone dans leur molécule et le benzène dans la fraction légère du réformat (voir tableau 1 ci-dessous). Dans cette coupe, les oléfines sont généralement de nature ramifiée et les alcanes correspondant sont plus légers que les dites oléfines. Le benzène, un autre réactif dans cette coupe, diffère de très peu en température d'ébullition du produit principal de sa réaction d'hydrogénation, le cyclohexane (différence de température d'ébullition de 0,6 °C). Donc, sous des conditions nécessaires pour assurer que les produits plus lourds restent au fond de colonne, le cyclohexane est généralement partagé entre les effluents en tête et au fond de colonne. Un autre produit issu de la réaction d'hydrogénation du benzène est le méthylcyclopentane. Ce produit est particulièrement favorisé par des catalyseurs d'hydrogénation ayant des fortes acidités. Lorsque l'isomérisation est réalisée dans le réacteur d'hydrogénation, un des catalyseurs particulièrement préféré, selon l'invention, est le platine sur alumine chloré et/ou fluoré Ce type de catalyseur présente une acidité relativement importante et donc favorise la réaction d'hydrogénation avec isomérisation du benzène en méthylcyclopentane, qui est caractérisé par un point d'ébullition largement inférieur à celui du benzène.

Un autre type de catalyseur pouvant être utilisé dans le cadre de l'invention pour la réaction d'isomérisation comprend au moins un métal choisi parmi le nickel, le zirconium et le platine, le métal étant sur un support alumine chlorée ou alumine zéolithique. Ce type de catalyseur peut être utilisé comme catalyseur d'hydrogénation et d'isomérisation lorsque l'étape d'isomérisation a lieu dans le même réacteur que celui de l'étape d'hydrogénation, ou être utilisé en plus du catalyseur d'hydrogénation si les deux réactions non pas lieu dans le même réacteur.

**Tableau 1**

| Composés à hydrogéner et produits | Température d'ébullition (°C) | Selon l'invention les composés distillent |
|---|---|---|
| 2-méthyl butène-1 (réactif) | 31,2 | en tête |
| 3-méthyl butène-2 (réactif) | 38,6 | en tête |
| 2-méthylbutane (produit) | 27,8 | en tête |
| benzène (réactif) | 80,1 | en tête |
| cyclohexane (produit) | 80,7 | en tête/au fond |
| méthylcyclopentane (produit) | 71,8 | en tête |

Le procédé selon l'invention permet ainsi d'hydrogéner une grande partie du (ou des) composé(s) à hydrogéner à l'extérieur de la zone de distillation éventuellement sous des conditions de pression et/ou de température différente à celle utilisé dans la colonne.

La réaction d'hydrogénation est une réaction exothermique. Dans certains cas, la quantité de réactif à hydrogéner est importante. Pour limiter la vaporisation des effluents de cette réaction, on peut avantageusement effectuer la réaction d'hydrogénation dans la zone située à l'extérieur de la colonne à une pression plus élevée que celle utilisée à l'intérieur de la zone de distillation. Cette augmentation de pression permet aussi une dissolution accrue du flux gazeux contenant de l'hydrogène dans la phase liquide contenant le (ou les) composé(s) à hydrogéner.

Selon une autre variante de l'invention, une partie de l'effluent du réacteur peut être éventuellement recyclé directement à l'entrée du réacteur d'hydrogénation sans repasser par la colonne, et après élimination optionnelle d'une fraction gazeuse (non illustré).

Le procédé est tel que l'écoulement du liquide à hydrogéner est généralement à co-courant à l'écoulement du flux gazeux comprenant de l'hydrogène, pour tout lit catalytique de la partie externe de la zone d'hydrogénation.

Pour la réalisation de l'hydrogénation, le rapport molaire théorique d'hydrogène nécessaire pour la conversion désirée du benzène est de 3. La quantité d'hydrogène distribuée avant ou dans la zone d'hydrogénation est éventuellement en excès par rapport à cette stoechiométrie, et ce d'autant plus que l'on doit hydrogéner, en plus du benzène présent dans la charge, au moins partiellement tout composé insaturé comprenant au plus neuf atomes de carbone par molécule et de manière préférée au plus 7 atomes de carbone et de manière encore préférée au plus 6 atomes de carbone et présent dans ladite charge. L'hydrogène en excès, s'il en existe, peut être avantageusement récupéré par exemple selon l'une des techniques décrites ci-après. Selon une première technique, l'hydrogène en excès qui sort de la zone réactionnelle d'hydrogénation est récupéré après séparation de la fraction liquide issue du réacteur, puis comprimé et réutilisé dans ladite zone réactionnelle.

Selon une seconde technique, l'hydrogène en excès qui sort de la zone réactionnelle est récupéré, puis injecté en amont des étapes de compression associées à une unité de réformage catalytique, en mélange avec de l'hydrogène provenant de ladite unité, ladite unité opérant de préférence à basse pression, c'est-à-dire généralement une pression inférieure à 8 bar (1 bar = 10⁵ Pa).

Selon une troisième technique, l'hydrogène en excès de la section réactionnelle est récupéré dans le distillat vapeur puis recomprimé pour être réinjecté en amont ou directement dans le réacteur.

L'hydrogène, compris dans le flux gazeux, utilisé dans le procédé de l'invention pour l'hydrogénation des composés insaturés peut provenir de toutes sources produisant de l'hydrogène à au moins 50 % volume de pureté, de préférence au moins 80 % volume de pureté et de façon encore plus préférée au moins 90 % volume de pureté. Par exemple, on peut citer l'hydrogène provenant des procédés de réformage catalytique, de méthanation, de P.S.A. (adsorption par alternance de pression), de génération éléctrochimique ou de vapocraquage.

Un des modes de réalisation préférés du procédé, indépendant ou non des modes de réalisation précédents, est tel que l'effluent de fond de la zone de distillation est mélangé au moins en partie à l'effluent de tête de ladite zone. Le mélange ainsi obtenu peut, après stabilisation éventuelle, être utilisé comme carburant soit directement, soit par incorporation aux fractions carburants.

Lorsque la zone d'hydrogénation est au moins en partie incorporée à la zone de distillation, le catalyseur d'hydrogénation peut être disposé dans la partie incorporée suivant les différentes technologies proposées pour conduire des distillations catalytiques. Elles sont essentiellement de deux types.

Suivant le premier type de technologies, la réaction et la distillation procèdent simultanément dans le même espace physique, comme l'enseignent par exemple la demande de brevet WO-A-90/02.603, et par exemple les brevets US-A-4.471.154 ou US-A-4.475.005. Le catalyseur est alors généralement en contact avec une phase liquide descendante, générée par le reflux introduit au sommet de la zone de distillation, et avec une phase vapeur ascendante, générée par la vapeur de rebouillage introduite en fond de zone. Selon ce type de technologies, le flux gazeux comprenant de l'hydrogène nécessaire à la zone réactionnelle, pour la réalisation du procédé selon l'invention, pourrait être joint à la phase vapeur, sensiblement à l'entrée d'au moins un lit catalytique de la zone réactionnelle.

Suivant le second type de technologies, le catalyseur est disposé de telle façon que la réaction et la distillation procèdent généralement de manière indépendante et consécutive, comme l'enseignent par exemple les brevets US-A-4.847.430, US-A-5.130.102 et US-A-5.368.691, la vapeur de la distillation ne traversant pratiquement pas tout lit catalytique de la zone réactionnelle. Ainsi, si l'on utilise ce type de technologie, le procédé est généralement tel que l'écoulement du liquide à hydrogéner est co-courant à l'écoulement du flux gazeux comprenant de l'hydrogène et tel que la vapeur de distillation n'est pratiquement pas en contact avec le catalyseur (ce qui se traduit généralement en pratique par le fait que ladite vapeur est séparée dudit liquide à hydrogéner), pour tout lit catalytique de la partie interne de la zone d'hydrogénation. De tels systèmes comportent généralement au moins un dispositif de distribution de liquide qui peut être par exemple un répartiteur de liquide, dans tout lit catalytique de la zone réactionnelle. Néanmoins, dans la mesure où ces technologies ont été conçues pour des réactions catalytiques intervenant entre des réactifs liquides, elles ne peuvent convenir sans modification pour une réaction catalytique d'hydrogénation, pour laquelle l'un des réactifs, l'hydrogène, est à l'état gazeux. Pour tout lit catalytique de la partie interne de la zone d'hydrogénation, il est donc généralement nécessaire d'adjoindre un dispositif de distribution de flux gazeux comprenant de l'hydrogène, par exemple selon l'une des trois techniques décrites ci-après. Ainsi, la partie interne de la zone d'hydrogénation comporte au moins un dispositif de distribution de liquide et au moins un dispositif de distribution de flux gazeux comprenant de l'hydrogène dans tout lit catalytique de la zone d'hydrogénation interne à la zone de distillation. Selon une première technique, le dispositif de distribution de flux gazeux comprenant de l'hydrogène est disposé avant le dispositif de distribution de liquide, et donc avant le lit catalytique. Selon une deuxième technique, le dispositif de distribution de flux gazeux comprenant de l'hydrogène est disposé au niveau du dispositif de distribution de liquide, de telle façon que le flux gazeux comprenant de l'hydrogène soit introduit dans le liquide avant le lit catalytique. Selon une troisième technique, le dispositif de distribution de flux gazeux comprenant de l'hydrogène est disposé après le dispositif de distribution de liquide, et donc au sein du lit catalytique, de préférence non loin dudit dispositif de distribution du liquide dans ledit lit catalytique. Les termes "avant" et "après" utilisés ci-avant s'entendent par rapport au sens de circulation du liquide qui va traverser le lit catalytique.

Une des réalisations du procédé est telle que le catalyseur de la partie interne de la zone d'hydrogénation est disposé dans la zone réactionnelle suivant le dispositif de base décrit dans le brevet US-A-5.368.691, aménagé de manière que tout lit catalytique de la partie interne de la zone d'hydrogénation soit alimenté par un flux gazeux comprenant de l'hydrogène, régulièrement distribué à sa base, par exemple selon l'une des trois techniques décrites ci-avant.

Lorsque la zone d'hydrogénation est au moins en partie interne à la zone de distillation, les conditions opératoires de la partie de la zone d'hydrogénation interne à la zone de distillation sont liées aux conditions opératoires de la distillation. La distillation peut être par exemple conduite de manière que son produit de fond contienne la majeure partie du cyclohexane et des isoparaffines à 7 atomes de carbone de la charge, ainsi que du cyclohexane formé par hydrogénation du benzène. Elle est réalisée sous une pression généralement comprise entre 0,2 et 2 MPa, de préférence entre 0,4 et 1 MPa, avec un taux de reflux compris entre 1 et 10, et de préférence compris entre 3 et 6. La température de tête de zone est comprise généralement entre 40 et 180 °C et la température de fond de zone est comprise généralement entre 120 et 280 °C. La réaction d'hydrogénation est conduite dans des conditions qui sont le plus généralement intermédiaires entre celles établies en tête et en fond de zone de distillation, à une température comprise entre 100 et 250 °C, et de préférence comprise entre 120 et 220 °C, et à une pression comprise entre 0,2 et 2 MPa, de préférence entre 0,4 et 1 MPa. La vitesse spatiale au sein de ladite zone d'hydrogénation, calculée par rapport au catalyseur, est généralement comprise entre 1 et 50 h⁻¹ et plus particulièrement entre 1 et 30 h⁻¹ (volume de charge par volume de catalyseur et par heure). Le débit d'hydrogène correspondant à la stoechiométrie des réactions d'hydrogénation en jeu est compris entre 0,5 et 10 fois ladite stoechiométrie, de préférence entre 1 et 6 fois ladite stoechiométrie et de façon encore plus préférée entre 1 et 3 fois ladite stoechiométrie. Le liquide soumis à l'hydrogénation est alimenté par un flux gazeux comprenant de l'hydrogène dont le débit dépend de la concentration en benzène dans ledit liquide et, plus généralement, des composés insaturés comportant au plus six atomes de carbone par molécule de la charge de la zone de distillation. Il est généralement au moins égal au débit correspondant à la stoechiométrie des réactions d'hydrogénation en jeu (hydrogénation du benzène et des autres composés insaturés comportant au plus six atomes de carbone par molécule, compris dans la charge d'hydrogénation) et au plus égal au débit correspondant à 10 fois la stoechiométrie, de préférence compris entre 1 et 6 fois la stoechiométrie, de manière encore plus préférée compris entre 1 et à 3 fois la stoechiométrie.

Dans la partie externe de la zone d'hydrogénation, le catalyseur est disposé dans tout lit catalytique suivant toute technologie connue de l'homme de métier dans des conditions opératoires (température, pression...) indépendantes ou non, de préférence indépendantes, des conditions opératoires de la zone de distillation.

Dans la partie de la zone d'hydrogénation externe à la zone de distillation, les conditions opératoires sont généralement les suivantes. La pression requise pour cette étape d'hydrogénation est généralement comprise entre 0,1 et 6 MPa, de préférence entre 0,2 et 5 MPa et de façon encore plus préférée entre 0,5 et 3,5 MPa. La température opératoire de la zone d'hydrogénation est généralement comprise entre 100 et 400 °C, de préférence entre 110 et 350 °C et de façon préférée entre 120 et 320 °C. La vitesse spatiale au sein de ladite zone d'hydrogénation, calculée par rapport au catalyseur, est généralement comprise entre 1 et 50 et plus particulièrement entre 1 et 30 h⁻¹ (volume de charge par volume de catalyseur et par heure). Le débit d'hydrogène correspondant à la stoechiométrie des réactions d'hydrogénation en jeu est compris entre 0,5 et 10 fois ladite stoechiométrie, de préférence entre 1 et 6 fois ladite stoechiométrie et de façon encore plus préférée entre 1 et 3 fois ladite stoechiométrie. Mais les conditions de température et de pression peuvent aussi, dans le cadre du procédé de la présente invention, être comprises entre celles qui sont établies en tête et en fond de zone de distillation.

De façon plus générale, quelle que soit la position de la zone d'hydrogénation par rapport à la zone de distillation, le catalyseur utilisé dans la zone d'hydrogénation selon le procédé de la présente invention comprend généralement au moins un métal choisi dans le groupe formé par le nickel et le platine, utilisé tel quel ou de préférence déposé sur un support. Le métal doit généralement se trouver sous forme réduite au moins pour 50 % en poids de sa totalité. Mais tout autre catalyseur d'hydrogénation connu de l'homme du métier peut également être choisi.

Lors de l'utilisation du platine, le catalyseur peut contenir avantageusement au moins un halogène dans une proportion en poids par rapport au catalyseur comprise entre 0,2 et 2 %. De manière préférée, on utilise le chlore ou le fluor ou la combinaison des deux dans une proportion par rapport au poids total de catalyseur comprise entre 0,2 et 1,5 %. Dans le cas de l'utilisation d'un catalyseur contenant du platine, on utilise généralement un catalyseur tel que la taille moyenne des cristallites de platine est inférieure à 60.10⁻¹⁰ m, de préférence inférieure à 20.10⁻¹⁰ m, de façon encore plus préférée inférieure à 10.10⁻¹⁰ m. De plus, la proportion totale de platine par rapport au poids total de catalyseur est généralement comprise entre 0,1 et 1 % et de façon préférée entre 0,1 et 0,6 %.

Dans le cas de l'utilisation du nickel, la proportion de nickel par rapport au poids total de catalyseur est comprise entre 5 et 70 %, plus particulièrement entre 10 et 70 % et de façon préférée entre 15 et 65 %. De plus, on utilise généralement un catalyseur tel que la taille moyenne des cristallites de nickel est inférieure à 100.10⁻¹⁰ m, de préférence inférieure à 80.10⁻¹⁰ m, de façon encore plus préférée inférieure à 60.10⁻¹⁰ m.

Le support est généralement choisi dans le groupe formé par l'alumine, les silice-alumines, la silice, les zéolithes, le charbon actif, les argiles, les ciments alumineux, les oxydes de terres rares et les oxydes alcalino-terreux, seuls ou en mélange. On utilise de préférence un support à base d'alumine ou de silice, de surface spécifique comprise entre 30 et 300 m²/g, de préférence entre 90 et 260 m²/g.

## Revendications

1. Procédé de traitement d'une première charge, constituée en majeure partie par des hydrocarbures comportant au moins 4 atomes de carbone par molécule et comprenant au moins un composé insaturé dont du benzène, et d'au moins une seconde charge, comprenant au moins un composé insaturé dont du benzène, tel que l'on traite ladite première charge dans une zone de distillation, une zone d'épuisement et une zone de rectification, associée à une zone réactionnelle d'hydrogénation, au moins en partie externe à la zone de distillation, comprenant au moins un lit catalytique, dans laquelle on réalise l'hydrogénation d'au moins une partie des composés insaturés contenus dans la première charge et de ladite seconde charge, en présence d'un catalyseur d'hydrogénation et d'un flux gazeux comprenant de l'hydrogène, ladite première charge étant prélevée à la hauteur d'au moins un niveau de prélèvement dans la zone de distillation, ladite seconde charge étant au moins partiellement directement injectée dans la zone réactionnelle d'hydrogénation externe à la zone de distillation, l'effluent de ladite zone réactionnelle étant au moins en partie réintroduit dans la zone de distillation à la hauteur d'au moins un niveau de réintroduction, pour assurer la continuité de la distillation, et sortir en tête de la zone de distillation, en soutirage latéral dans la zone de distillation, et en fond de zone de distillation un effluent appauvri en composés insaturés,.

2. Procédé selon la revendication 1 dans lequel le soutirage latéral est réalisé au dessus de la ligne de retour de la zone réactionnelle.

3. Procédé selon la revendication 1 dans lequel le soutirage latéral est réalisé au dessous de la ligne de retour de la zone réactionnelle.

4. Procédé selon l'une des revendications 1 à 3 dans lequel la seconde charge est constituée au moins par des hydrocarbures comportant au moins 4 atomes de carbone par molécule.

5. Procédé selon une des revendications 1 à 4 dans lequel la seconde charge est constituée par une coupe C₅/C₆ de type naphta léger de distillation straight-run et/ou de type naphta produit par unité d'hydrocraquage, et/ou par des coupes enrichies en benzène et/ou toluène et appauvries en soufre et azote issues de craquage catalytique et/ou par des coupes essences constituées de coupes enrichies en benzène et/ou toluène appauvries en soufre et azote issues d'unité de cokéfaction ou de viscoréduction, et/ou par des coupes enrichies en benzène et/ou toluène, appauvries en soufre et azote et obtenues après craquage d'oléfines ou oligocraquage, et/ou par des coupes riches en benzène et/ou toluène, appauvries en soufre et azote et issues d'unité de production d'oléfines par vapocraquage.

6. Procédé selon la revendication1 dans lequel la seconde charge est constituée d'au moins une charge choisie parmi :
- des hydrocarbures comportant au moins 4 atomes de carbone par molécule,
- une coupe C₅/C₆ de type naphta léger de distillation straight-run,
- une coupe C₅/C₆ de type naphta produit par unité d'hydrocraquage.
- une coupe d'essence de coeur de craquage catalytique enrichie en benzène par rapport à l'essence totale de craquage catalytique,
- une coupe d'essences légères d'unité de cokéfaction enrichie en benzène par rapport à l'essence totale de cokéfaction,
- une coupe enrichie en benzène obtenue après séparation et hydrotraitement d'essences issues de craquage d'oléfines ou oligocraquage,
- une coupe riche en benzène issue d'unité de production d'oléfines par vapocraquage.

7. Procédé selon l'une des revendications 1 à 6 dans lequel la distillation est réalisée sous une pression comprise entre 0,2 et 2 MPa, avec un taux de reflux compris entre 0.5 et 10, la température de tête de zone de distillation étant comprise entre 40 et 180 °C et la température de fond de zone de distillation étant comprise entre 120 et 280 °C.

8. Procédé selon l'une des revendications 1 à 7 dans lequel la zone réactionnelle d'hydrogénation est en totalité externe à la zone de distillation.

9. Procédé selon l'une des revendications 1 à 7 dans lequel la zone réactionnelle d'hydrogénation est à la fois partiellement incorporée dans la zone de rectification de la zone de distillation et partiellement externe à la zone de distillation.

10. Procédé selon la revendication 9 dans lequel la réaction réactionnelle d'hydrogénation, effectuée dans la partie de la zone d'hydrogénation interne à la zone de distillation, est conduite à une température comprise entre 100 et 200 °C, à une pression comprise entre 0,2 et 2 MPa, une vitesse spatiale au sein de la zone réactionnelle d'hydrogénation interne, calculée par rapport au catalyseur, comprise entre 1 et 50 h⁻¹ et le débit de l'hydrogène alimentant la zone réactionnelle d'hydrogénation est compris entre 0.5 et 10 fois le débit correspondant à la stoechiométrie des réactions d'hydrogénation en jeu.

11. Procédé selon l'une des revendications 1 à 9 dans lequel la réaction d'hydrogénation effectuée dans la partie externe de la zone de distillation est réalisée à une pression comprise entre 0,1 et 6 MPa, une température comprise entre 100 et 400 °C, une vitesse spatiale au sein de la zone réactionnelle d'hydrogénation, calculée par rapport au catalyseur, généralement comprise entre 1 et 50 h⁻¹, et un débit d'hydrogène correspondant à la stoechiométrie des réactions d'hydrogénation en jeu est compris entre 0,5 et 10 fois ladite stoechiométrie.

12. Procédé selon l'une des revendications 1 à 11 dans lequel on réalise une étape d'isomérisation de la charge de la zone réactionnelle prélevée à la hauteur d'au moins un niveau de prélèvement dans la zone de distillation.

13. Procédé selon la revendication 12 dans lequel l'étape d'isomérisation est réalisée dans le réacteur d'hydrogénation en même temps que la réaction d'hydrogénation.

14. Procédé selon la revendication 12 dans lequel l'étape d'isomérisation est réalisée à l'extérieur du réacteur de d'hydrogénation et après l'étape d'hydrogénation.

15. Procédé selon l'une des revendications 10 ou 11 dans lequel le catalyseur d'hydrogénation est en contact avec une phase liquide descendante et avec une phase vapeur ascendante, pour tout lit catalytique de la partie interne de la zone réactionnelle d'hydrogénation.

16. Procédé selon la revendication 15 tel que le flux gazeux comprenant de l'hydrogène nécessaire à la zone réactionnelle d'hydrogénation est joint à la phase vapeur, sensiblement à l'entrée d'au moins un lit catalytique de la zone réactionnelle d'hydrogénation.

17. Procédé selon l'une des revendications 9 ou 10 dans lequel l'écoulement du liquide à hydrogéner est co-courant à l'écoulement du flux gazeux comprenant de l'hydrogène, pour tout lit catalytique de la partie interne de la zone réactionnelle d'hydrogénation.

18. Procédé selon l'une des revendications 9 ou 10 dans lequel l'écoulement du liquide à hydrogéner est co-courant à l'écoulement du flux gazeux comprenant de l'hydrogène et tel que la vapeur de distillation n'est pratiquement pas en contact avec le catalyseur, pour tout lit catalytique de la partie interne de la zone réactionnelle d'hydrogénation.

19. Procédé selon l'une des revendications 1 à 18 dans lequel le catalyseur utilisé dans la zone réactionnelle d'hydrogénation comprend au moins un métal choisi dans le groupe formé par le nickel, le zirconium et le platine.

20. Procédé selon la revendication 19 dans lequel le métal est sur support alumine chlorée ou alumine zéolithique.

21. Utilisation du précédé selon une des revendications 1 à 20 pour la préparation d'une charge d'isomérisation de paraffines de meilleure qualité.

## Patentansprüche

1. Verfahren zur Behandlung einer ersten Charge, die hauptsächlich aus Kohlenwasserstoffen besteht, die mindestens 4 Kohlenstoffatome je Molekül aufweisen und mindestens eine ungesättigte Verbindung, einschließlich Benzol, umfassen, und mindestens einer zweiten Charge, die mindestens eine ungesättigte Verbindung, einschließlich Benzol, umfasst, derart, dass die erste Charge in einer Destillationszone, einer Strippinzone und einer Rektifikationszone, die mit einer Hydrierreaktionszone verbunden ist, die mindestens teilweise außerhalb der Destillationszone liegt, behandelt wird, umfassend mindestens ein katalytisches Bett, in dem die Hydrierung mindestens eines Teils der ungesättigten Verbindungen, die in der ersten Charge enthalten sind, und der zweiten Charge, in Gegenwart eines Hydrierkatalysators und eines Gasstroms, der Wasserstoff umfasst, durchgeführt wird, wobei die erste Charge in Höhe mindestens einer Entnahmestufe in der Destillationszone entnommen wird, wobei die zweite Charge mindestens teilweise direkt in die Hydrierreaktionszone außerhalb der Destillationszone eingespritzt wird, wobei der Abfluss aus der Reaktionszone mindestens teilweise wieder in die Destillationszone in Höhe mindestens einer Wiedereinführungsstufe eingeführt wird, um die Kontinuität der Destillation zu gewährleisten, und Abziehen am Kopf der Destillationszone über einen Seitenstrom in der Destillationszone und am Boden der Destillationszone eines an ungesättigten Verbindungen abgereicherten Abflusses.

2. Verfahren nach Anspruch 1, wobei der Seitenabzug oberhalb der Rücklaufleitung der Reaktionszone durchgeführt wird.

3. Verfahren nach Anspruch 1, wobei der Seitenabzug unterhalb der Rücklaufleitung der Reaktionszone durchgeführt wird.

4. Verfahren nach einem der Ansprüche 1 bis 3, wobei die zweite Charge mindestens aus Kohlenwasserstoffen besteht, die mindestens 4 Kohlenstoffatome je Molekül aufweisen.

5. Verfahren nach einem der Ansprüche 1 bis 4, wobei die zweite Charge aus einem C₅/C₆-Schnitt eines leichten Straight-run-Destillationsnaphtas und/oder eines Naphtas, das durch eine Hydrocracking-Einheit hergestellt wurde, und/oder aus Schnitten, die mit Benzol und/oder Toluol angereichert und an Schwefel und Stickstoff abgereichert sind, die aus dem katalytischen Cracken stammen, und/oder aus Benzinschnitten, die aus Schnitten bestehen, die mit Benzol und/oder Toluol angereichert und an Schwefel und Stickstoff abgereichert sind, die aus einer Verkokungs- oder Visbreaking-Einheit stammen, und/oder aus Schnitten, die mit Benzol und/oder Toluol angereichert, an Schwefel und Stickstoff abgereichert sind und die nach dem Cracken von Olefinen oder Oligcracken erhalten werden, und/oder aus benzol- und/oder toluolreichen Schnitten, die an Schwefel und Stickstoff abgereichert sind, und die aus einer Einheit zur Produktion von Olefinen durch Dampfcracken stammen, besteht.

6. Verfahren nach Anspruch 1, wobei die zweite Charge aus mindestens einer Charge besteht, ausgewählt aus:
- Kohlenwasserstoffen, die mindestens 4 Kohlenstoffatome je Molekül aufweisen,
- einem C₅/C₆-Schnitt eine leichten Straight-run-Destillationsnaphtas,
- einem C₅/C₆-Schnitt eines durch eine Hydrocracking-Einheit hergestellten Naphtas,
- einem Benzinschnitt im mittleren Siedebereich aus den katalytischen Cracken, der in Bezug auf das gesamte Benzin aus dem katalytischen Cracken mit Benzol angereichert ist,
- einem leichten Benzinschnitt aus einer Verkokungseinheit, der in Bezug auf das gesamte Benzin aus der Verkokung mit Benzol angereichert ist,
- einem Schnitt, der mit Benzol angereichert ist, der nach Trennung und Hydrobehandlung von Benzinen, die aus dem Cracken von Olefinen oder Oligocracken stammen, erhalten wird,
- einem benzolreichen Schnitt aus einer Einheit zur Produktion von Olefinen durch Damfcracken.

7. Verfahren nach einem der Ansprüche 1 bis 6, wobei die Destillation unter einem Druck im Bereich zwischen 0,2 und 2 MPa mit einem Rücklaufverhältnis im Bereich zwischen 0,5 und 10 durchgeführt wird, wobei die Temperatur am Kopf der Destillationszone im Bereich zwischen 40 und 180 °C liegt und die Temperatur am Boden der Destillationszone im Bereich zwischen 120 und 280 °C liegt.

8. Verfahren nach einem der Ansprüche 1 bis 7, wobei die Hydrierreaktionszone vollständig außerhalb der Destillationszone liegt.

9. Verfahren nach einem der Ansprüche 1 bis 7, wobei die Hydrierreaktionszone gleichzeitig teilweise in die Rektifiktationzone der Destillationszone integriert ist und teilweise außerhalb der Destillationszone liegt.

10. Verfahren nach Anspruch 9, wobei die reaktive Hydrierreaktion, die in dem Teil der Hydrierzone innerhalb der Destillationszone ausgeführt wird, bei einer Temperatur im Bereich zwischen 100 und 200 °C, bei einem Druck im Bereich zwischen 0,2 und 2 MPa, einer Raumgeschwindigkeit innerhalb der inneren Hydrierreaktionszone, berechnet in Bezug auf den Katalysator, im Bereich zwischen 1 und 50 h⁻¹ durchgeführt wird, und der Wasserstoffmassenstrom, der der Hydrierreaktionszone zugeführt wird, im Bereich zwischen dem 0,5- und 10-Fachen des Massenstroms liegt, der der Stöchiometrie der beteiligten Hydrierreaktionen entspricht.

11. Verfahren nach einem der Ansprüche 1 bis 9, wobei die Hydrierreaktion, die in dem Teil außerhalb der Destillationszone ausgeführt wird, bei einem Druck im Bereich zwischen 0,1 und 6 MPa, einer Temperatur im Bereich zwischen 100 und 400 °C, einer Raumgeschwindigkeit innerhalb der Hydrierreaktionszone, berechnet in Bezug auf den Katalysator, im Allgemeinen im Bereich zwischen 1 und 50 h⁻¹ durchgeführt wird, und wobei ein Wasserstoffmassenstrom, der der Stöchiometrie der beteiligten Hydrierreaktionen entspricht, im Bereich zwischen dem 0,5- und 10-Fachen der Stöchiometrie liegt.

12. Verfahren nach einem der Ansprüche 1 bis 11, wobei ein Schritt zur Isomerisierung der Charge der Reaktionszone, der in Höhe mindestens einer Entnahmestufe in der Destillationszone entnommen wird, durchgeführt wird.

13. Verfahren nach Anspruch 12, wobei der Isomerisierungsschritt in dem Hydrierreaktor gleichzeitig mit der Hydrierreaktion durchgeführt wird.

14. Verfahren nach Anspruch 12, wobei der Isomerisierungsschritt außerhalb des Hydrierreaktors und nach dem Hydrierschritt durchgeführt wird.

15. Verfahren nach einem der Ansprüche 10 oder 11, wobei der Hydrierkatalysator für jedes katalytische Bett des inneren Teils der Hydrierreaktionszone mit einer absteigenden flüssigen Phase und mit einer aufsteigenden Dampfphase in Kontakt ist.

16. Verfahren nach Anspruch 15, derart, dass der Gasstrom, der den Wasserstoff umfasst, der für die Hydrierreaktionszone erforderlich ist, im Wesentlichen am Einlass mindestens eines katalytischen Betts der Hydrierreaktionszone mit der Dampfphase vereinigt wird.

17. Verfahren nach einem der Ansprüche 9 oder 10, wobei der Austrag der zu hydrierenden Flüssigkeit für jedes katalytische Bett des inneren Teils der Hydrierreaktionszone im Gleichstrom mit dem Austrag des Gasstroms, der Wasserstoff umfasst, erfolgt.

18. Verfahren nach einem der Ansprüche 9 oder 10, wobei der Austrag der zu hydrierenden Flüssigkeit für jedes katalytische Bett des inneren Teils der Hydrierreaktionszone im Gleichstrom mit dem Austrag des Gasstroms, der Wasserstoff umfasst, und derart erfolgt, dass der Destillationsdampf praktisch nicht in Kontakt mit dem Katalysator ist.

19. Verfahren nach einem der Ansprüche 1 bis 18, wobei der Katalysator, der in der Hydrierreaktionszone verwendet wird, mindestens ein Metall umfasst, ausgewählt aus der Gruppe gebildet aus Nickel, Zirkon und Platin.

20. Verfahren nach Anspruch 19, wobei sich das Metall auf einem chlorierten Aluminiumoxid- oder einem zeolitischen Aluminiumoxid-Träger befindet.

21. Verwendung des Verfahrens nach einem der Ansprüche 1 bis 20 zur Herstellung eines Paraffinisomerisierungseinsatzes höherer Qualität.

## Claims

1. Process for treatment of a first feedstock, consisting for the most part of hydrocarbons that comprise at least 4 carbon atoms per molecule and that comprise at least one unsaturated compound including benzene, and at least a second feedstock, comprising at least one unsaturated compound including benzene, such that said first feedstock is treated in a distillation zone, a drainage zone, and a rectification zone, associated with a hydrogenation reaction zone, at least in part outside of the distillation zone, comprising at least one catalytic bed, in which the hydrogenation of at least one portion of the unsaturated compounds contained in the first feedstock and the second feedstock is carried out in the presence of a hydrogenation catalyst and a gaseous stream that comprises hydrogen, whereby the first feedstock is sampled at at least one sampling level in the distillation zone, whereby the second feedstock is at least partially directly injected into the hydrogenation reaction zone that is outside of the distillation zone,whereby the effluent from the reaction zone is at least in part reintroduced into the distillation zone at at least one reintroduction level to ensure the continuity of the distillation and to discharge - at the top of the distillation zone, in a lateral draw-off in the distillation zone, and at the bottom of the distillation zone - an effluent that is low in unsaturated compounds.

2. Process according to claim 1, wherein the lateral draw-off is implemented above the return line of the reaction zone.

3. Process according to claim 1, wherein the lateral draw-off is carried out below the return line of the reaction zone.

4. Process according to one of claims 1 to 3, wherein the second feedstock is constituted at least by hydrocarbons that comprise at least 4 carbon atoms per molecule.

5. Process according to one of claims 1 to 4, wherein the second feedstock consists of a C₅/C₆ fraction of the straight-run distillation light naphtha type, and/or of the naphtha type that is produced by a hydrocracking unit, and/or by fractions that are enriched with benzene and/or toluene and are low in sulfur and nitrogen that are obtained from catalytic cracking, and/or by gasoline fractions that consist of fractions that are enriched with benzene and/or toluene and that are low in sulfur and nitrogen that are obtained from coking or viscoreduction units, and/or by fractions that are enriched with benzene and/or toluene, low in sulfur and nitrogen, and obtained after cracking of olefins or oligocracking, and/or by fractions that are rich in benzene and/or toluene, low in sulfur and nitrogen, and obtained from a unit for production of olefins by steam-cracking.

6. Process according to claim 1, wherein the second feedstock consists of at least one feedstock that is selected from among:
- Hydrocarbons that comprise at least 4 carbon atoms per molecule,
- A C₅/C₆ fraction of the straight-run distillation light naphtha type,
- A C₅/C₆ fraction of the naphtha type that is produced by a hydrocracking unit,
- A gasoline fraction of the catalytic cracking core that is enriched with benzene relative to the complete gasoline of catalytic cracking,
- A fraction of light gasolines from a coking unit that is enriched with benzene relative to the complete coking gasoline,
- A fraction that is enriched with benzene that is obtained after separation and hydrotreatment of gasolines obtained from cracking olefins or oligocracking,
- A benzene-rich fraction that is obtained from a unit for producing olefins by steam-cracking.

7. Process according to one of claims 1 to 6, wherein the distillation is carried out under a pressure of between 0.2 and 2 MPa, with a reflux rate of between 0.5 and 10, whereby the temperature of the top of the distillation zone is between 40 and 180°C and the temperature of the bottom of the distillation zone is between 120 and 280°C.

8. Process according to one of claims 1 to 7, wherein the hydrogenation reaction zone is completely outside of the distillation zone.

9. Process according to one of claims 1 to 7, wherein the hydrogenation reaction zone is both partially incorporated in the rectification zone of the distillation zone and partially outside of the distillation zone.

10. Process according to claim 9, wherein the hydrogenation reaction, carried out in the portion of the hydrogenation zone that is inside of the distillation zone, is conducted at a temperature of between 100 and 200°C, at a pressure of between 0.2 and 2 MPa, a volumetric flow rate within the inner hydrogenation reaction zone, calculated relative to the catalyst, encompassed between 1 and 50 h⁻¹, and the flow rate of the hydrogen that supplies the hydrogenation reaction zone is between 0.5 and 10 times the flow rate that corresponds to the stoichiometry of the hydrogenation reactions that are involved.

11. Process according to one of claims 1 to 9, wherein the hydrogenation reaction that is carried out in the portion outside of the distillation zone is carried out at a pressure of between 0.1 and 6 MPa, a temperature of between 100 and 400°C, and a volumetric flow rate within the hydrogenation reaction zone, calculated relative to the catalyst, generally between 1 and 50 h⁻¹, and a hydrogen flow rate that corresponds to the stoichiometry of the hydrogenation reactions involved is between 0.5 and 10 times said stoichiometry.

12. Process according to one of claims 1 to 11, wherein a stage for isomerization of the feedstock of the reaction zone that is sampled at at least one sampling level is carried out in the distillation zone.

13. Process according to claim 12, wherein the isomerization stage is carried out in the hydrogenation reactor at the same time as the hydrogenation reaction.

14. Process according to claim 12, wherein the isomerization stage is carried out outside of the hydrogenation reactor and downstream from the hydrogenation stage.

15. Process according to one of claims 10 or 11, wherein the hydrogenation catalyst is in contact with a downflowing liquid phase and with an upflowing vapor phase for any catalytic bed of the inner portion of the hydrogenation reaction zone.

16. Process according to claim 15, such that the gaseous stream that comprises the hydrogen that is necessary for the hydrogenation reaction zone is adjacent to the vapor phase, approximately at the inlet of at least one catalytic bed of the hydrogenation reaction zone.

17. Process according to one of claims 9 or 10, wherein the flow of the liquid that is to be hydrogenated is co-current to the flow of the gaseous stream that comprises hydrogen for any catalytic bed of the inner portion of the hydrogenation reaction zone.

18. Process according to one of claims 9 or 10, wherein the flow of the liquid that is to be hydrogenated is co-current to the flow of the gaseous stream that comprises hydrogen and such that the distillation vapor is virtually not in contact with the catalyst, for any catalytic bed of the inner portion of the hydrogenation reaction zone.

19. Process according to one of claims 1 to 18, wherein the catalyst that is used in the hydrogenation reaction zone comprises at least one metal that is selected from the group that is formed by nickel, zirconium, and platinum.

20. Process according to claim 19, wherein the metal is on the chlorinated alumina or zeolitic alumina substrate.

21. Use of the process according to one of claims 1 to 20 for the preparation of a feedstock for isomerization of paraffins of improved quality.
